# EUROPÄISCHE PATENTSCHRIFT

(11) **EP 1 042 860 B1**
(45) Veröffentlichungstag und Bekanntmachung des Hinweises auf die Patenterteilung: **05.01.2011**
(21) Anmeldenummer: 99948702.8
(22) Anmeldetag: 27.07.1999
(51) Int. Cl.: H02P 9/10, H02H 7/06

(54) **GESTEUERTE GLEICHRICHTERBRÜCKE MIT ÜBERSPANNUNGSSCHUTZ**
CONTROLLED RECTIFIER BRIDGE WITH OVER-VOLTAGE PROTECTION
REDRESSEUR EN PONT COMMANDE A LIMITEUR DE TENSION

(30) Priorität: 05.08.1998 DE 19835316
(43) Veröffentlichungstag der Anmeldung: 11.10.2000
(73) Patentinhaber: ROBERT BOSCH GMBH, 70442 Stuttgart (DE)
(72) Erfinder: KOELLE, Gerhard, D-75446 Wiernsheim (DE); GEIGER, Albert, D-71735 Eberdingen (DE); HACKLER, Christof, D-57319 Berleburg (DE)
(86) Internationale Anmeldenummer: PCT/DE1999/002300
(87) Internationale Veröffentlichungsnummer: WO 2000/008747

(56) Entgegenhaltungen:
- FR-A- 2 721 448

## Beschreibung

Die Erfindung geht aus von einer gesteuerten Gleichrichterbrücke mit Überspannungsschutz für einen Generator, insbesonders für einen in einem Fahrzeug eingesetzten Drehstromgenerator nach der Gattung des Hauptanspruchs.

### Stand der Technik

Die Erzeugung elektrischer Energie für ein Kraftfahrzeugbordnetz erfolgt üblicherweise mit einem von der Brennkraftmaschine des Fahrzeugs angetriebenen Drehstromgenerator, dessen Ausgangsspannung von einem Spannungsregler geregelt wird. Die Ausgangsspannung des Generators wird mit Hilfe einer Gleichrichterbrücke in eine Gleichspannung gewandelt. Als Gleichspannungsbrücke werden üblicherweise sechs Zenerdioden eingesetzt, die zwischen dem Plus- und dem Minusanschluß des Generators liegen.

Es ist jedoch auch bekannt, anstelle von Zenerdioden ansteuerbare Gleichrichterelemente einzusetzen, die von Steuermitteln angesteuert werden. Der Einsatz einer gesteuerten Gleichrichterbrücke wird beispielsweise in der US 4,825,139 beschrieben. Dabei wird auch die Verwendung von MOS-Feldeffekttransistoren in der Gleichrichterbrücke vorgeschlagen. Mit Hilfe einer solchen gesteuerten Gleichrichterbrücke läßt sich eine Generatorregelung durchführen, die auch bei kleinen Drehzahlen eine Generatorausgangsspannung ermöglicht, die zur Versorgung des Bordnetzes geeignet ist.

Aus der FR-A- 2 721448 ist bekannt, für einen mehrere Phasenwicklungen und eine Erregerwicklung aufweisenden Generator eine gesteuerte Gleichrichterbrücke die als MOS-Feldeffekttransistoren ausgebildete Gleichrichterelemente umfasst und mit den Phasenwicklungen des Generators in Verbindung stehen, einzusetzen. Die vom Generator gelieferte Spannung wir damit vor Zuführung zu einer Batterie sowie zu elektrischen Lasten gleichgerichtet, wobei die Höhe der Generatorspannung mittels eines Spannungsreglers der den durch die Erregerwicklung fließenden Erregerstrom beeinflusst, geregelt wird. Der Erregerwicklung ist eine Schutzschaltung zugeordnet, die die in der Erregerwicklung bei schneller Lastverringerung entstehende Überspannung über einen eigenen Stromkreis abbaut.

### Vorteile der Erfindung

Die erfindungsgemäße gesteuerte Gleichrichterbrücke mit Überspannungsschutz hat gegenüber dem Stand der Technik den Vorteil, daß die bei einem Lastabwurf auftretenden Spannungsspitzen verringert werden. Eine Verringerung dieser Spannungsspitzen ist beim Einsatz einer selbstgesteuerten Gleichrichterbrücke mit MOS-Feldeffekttransistoren notwendig.

Erzielt werden diese Vorteile, indem eine gesteuerte Gleichrichterbrücke mit Überspannungsschutz gemäß der Merkmalskombination des Anspruchs 1 eingesetzt wird. Mit dieser gesteuerten Gleichrichterbrücke mit Überspannungsschutz werden die bei einem Lastabwurf entstehenden Überspannungen, die von der in der Erregerwicklung des Generators gespeicherten magnetischen Energie verursacht werden, schnell abgebaut, indem eine Rückspeisung der gespeicherten Energie in die Batterie erfolgt.

Weitere Vorteile der Erfindung werden durch die in den Unteransprüchen angegebenen Maßnahmen erzielt. Es ist dabei besonders vorteilhaft, daß durch die Rückspeisung des Erregerstromes ein schnelles Absinken der durch den Lastabwurf verursachten Load-Dump-Spannung erzielt wird, wobei der von dieser Load-Dump-Spannung verursachte Kurzschlußstrom, der von den MOS-Feldeffekttransistoren im

Kurzschlußfall beherrscht werden muß, besonders gering gehalten werden kann.

### Zeichnung

Ein Ausführungsbeispiel der Erfindung ist in der Zeichnung dargestellt und wird in der nachfolgenden Beschreibung näher erläutert. Im einzelnen zeigt Figur 1 eine Schaltung zur Verhinderung der durch den Lastabwurf verursachten Load-Dump-Spannung. In Figur 2 ist ein Generator mit einer selbstgesteuerten Gleichrichterbrücke dargestellt, und die Figuren 3 und 4 zeigen den Spannungsverlauf der Load-Dump-Spannung sowie den zugehörigen Stromverlauf bei Kurzschluß der Low-Side-Transistoren der Gleichrichterbrücke einerseits im Normalbetrieb und andererseits bei der erfindungsgemäßen Entregung durch Batterierückspeisung.

### Beschreibung

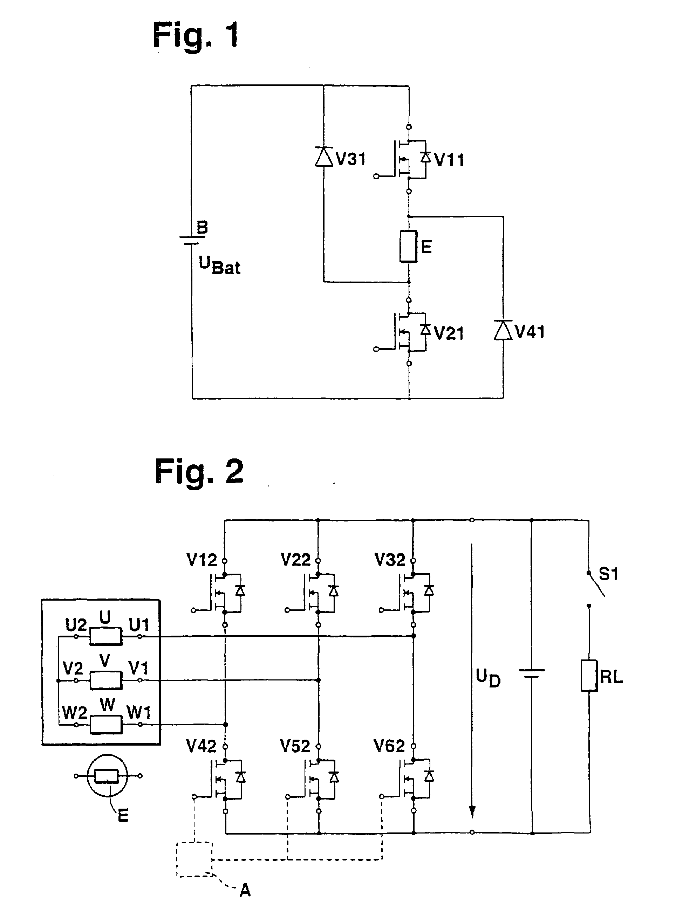

In Figur 1 ist eine Schaltung zur Verhinderung der Load-Dump-Spannung, die bei einem plötzlichen Lastabwurf auftreten kann, dargestellt. Diese Schaltungsanordnung ist der Erregerwicklung E des Generators zugeordnet, sie umfaßt die beiden Halbleiterventile V11 und V21, die beispielsweise MOS-Feldeffekttransistoren sind. Über die beiden Transistoren V11 und V21 ist die Erregerwicklung E mit der Batterie B verbindbar. Die Ansteuerung der Transistoren V11 und V21 erfolgt mit Hilfe eines nicht näher dargestellten Spannungsreglers, der das Gate-Potential der MOSFETs beeinflußt. Bei leitenden Transistoren V11 und V21 liegt an der Erregerwicklung E die Spannung U_{Bat}.

Mit Hilfe der beiden Transistoren V11 und V21 stellt der Spannungsregler den durch die Erregerwicklung E fließenden Erregerstrom IE so ein, daß die Ausgangsspannung des Generators die gewünschte Höhe einnimmt. Eine Verringerung der Ausgangsspannung des Generators wird durch Abschalten des Erregerstromes erzielt. Da bei der Abschaltung des Erregerstromes IE in der Erregerwicklung eine Gegenspannung induziert wird, sind in der Schaltung nach Figur 1 zwei Halbleiterventile V31 und V41, beispielsweise Dioden vorgesehen, die beim Abschalten des Erregerstromes, also bei gesperrten Transistoren V11 und V21 die in der Erregerwicklung E gespeicherte magnetische Energie in die Batterie B zurückführen. Insbesonders im Load-Dump-Fall, also bei einem Betriebszustand, bei dem die Belastung des Generators sehr schnell verringert wird, beispielsweise durch einen Lastabwurf oder durch das Abschalten starker elektrischer Verbraucher ist es erforderlich, daß die sich einstellende Load-Dump-Spannung schnell abgebaut wird. Dieser Abbau wird mit den Halbleiterventilen V31 und V41 besonders schnell erreicht.

In Figur 2 ist ein Generator G1 sowie eine dem Generator G1 zugeordnete selbstgesteuerte Gleichrichterbrücke mit sechs Halbleiterelementen, z.B. MOSFETs dargestellt, für die eine Schaltung nach Figur 1 besonders vorteilhaft eingesetzt werden kann. Vom Generator G1 sind die Ständerwicklungen U, V und W sowie die Erregerwicklung E dargestellt. Die Erregerwicklung E entspricht dabei der Erregerwicklung E nach Figur 1. Die Anschlüsse der Statorwicklungen U, V und W sind mit U1, U2, V1, V2, W1 und W2 bezeichnet. Die Verschaltung zwischen dem Generator G1 und der Gleichrichterbrücke ist derart, daß jeweils zwei Feldeffekttransistoren V12, V42 V22, V52; V32, V62 eine Serienschaltung bildet. Die Verbindungspunkte der jeweils zwei in Serie geschalteten Transistoren führen auf die Generatoranschlüsse W1, V1 und U1. Die jeweils voneinander entfernten Anschlüsse der Transistoren V12 bis V62 sind jeweils untereinander verbunden. Zwischen den zugehörigen Anschlüssen entsteht die Spannung UD, die als Ausgangsspannung des Generators zur Ladung der Batterie B bzw. zur Versorgung der elektrischen Lasten RL dienen.

Bei schneller Öffnung des Schalters S1 bzw. auch bei einem ungewollten Lastabwurf findet zum einen die bereits in Verbindung mit Figur 1 erläuterte Rückspeisung der in der Erregerwicklung induzierten Spannung in die Batterie statt und zum anderen werden die Transistoren V12 bis V62 der Gleichrichterbrücke so angesteuert, daß ein Auftreten der Load-Dump-Spannung verhindert wird. Dazu wird mit Hilfe eines Kurzschlusses der sogenannten Low-Side-Transistoren V42, V52 und V62 oder alternativ der High-Side-Transistoren V12, V22, V 32 ein Kurzschluß der Generatorwicklungen erhalten. Die Low- oder High-Side-Transistoren werden dabei von einer Ansteuerschaltung A, die beispielsweise im Spannungsregler integriert ist, so angesteuert, daß der gewünschte Kurzschluß auftritt. Es wird dazu eine geeignete Steuerspannung an den Gate-Anschluß der Transistoren, beispielsweise der MOS-Feldeffekttransistoren, angelegt. Wird vom Spannungsregler erkannt, daß die Load-Dump-Spannung eine vorgebbare definierte Spannungsgrenze unterschreitet, wird der Kurzschluß der Low- oder High-Side-Transistoren durch entsprechende Ansteuerung aufgehoben und der selbstgesteuerte Gleichrichter mit den Transistoren V12 bis V62 nimmt den eigentlichen Betrieb wieder auf.

Durch Kombination der beiden in den Figuren 1 und 2 dargestellten Schaltungsanordnungen läßt sich ein Generator mit einer MOS-Feldeffekttransistor-Gleichrichterbrücke realisieren, die einen Load-Dump-Schutz aufweist, so daß auch bei einem Lastabwurf keine Überspannungen auftreten können.

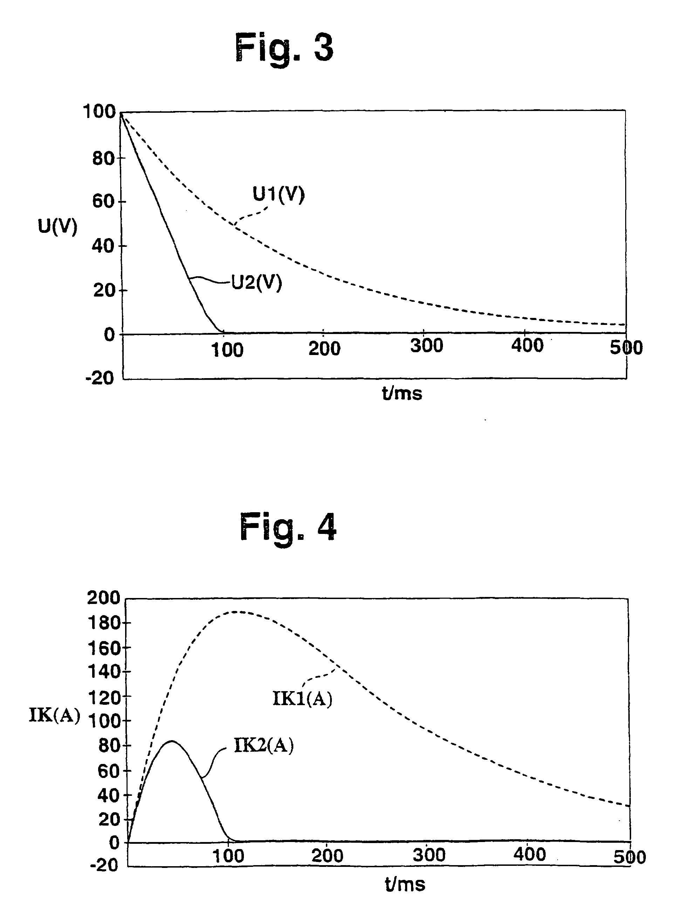

In Figur 3 sind zwei Beispiele für den Spannungsverlauf der Load-Dump-Spannung im Normalbetrieb U1 [V] und bei Entregung durch Batterierückspeisung U2 [V] dargestellt, die die Vorteile der Erfindung erkennen lassen. Im Normalbetrieb, also bei einem Generator mit MOS-Feldeffekttransistoren ohne Schaltung zur Verhinderung der Load-Dump-Spannung nach Figur 1 sinkt die Load-Dump-Spannung von ihrem Maximalwert von beispielsweise 100 V nur langsam ab, während bei einer Entregung durch Batterierückspeisung bereits nach 100 ms eine vollständige Entregung erhalten wird. Für den in Figur 4 dargestellten Stromverlauf im Load-Dump-Fall bei Kurzschluß der Low-Side-Transistoren ergibt sich im Normalbetrieb IK1 [A] ein starkes Ansteigen des Stromes und nur ein langsames Abfallen, während bei einer Entregung durch Batterierückspeisung die maximale Stromstärke wesentlich geringer ist und der Kurzschlußstrom bereits nach 100 ms wieder auf Null abgeklungen ist.Der Stromverlauf ist als IK2 [A] über der Zeit t aufgetragen. Wie die Figuren 3 und 4 erkennen lassen, kann mit Hilfe der Entregung der Erregerwicklung durch Batterierückspeisung eine Gleichrichterbrücke mit MOS-Feldeffekttransistoren aufgebaut werden, die auch im Load-Dump-Fall zuverlässig arbeitet und Überspannungen weitestgehend verhindert.

## Patentansprüche

1. Gesteuerte Gleichrichterbrücke mit einem mehrere Phasenwicklungen (U, V, W) und eine Erregerwicklung (E) aufweisenden Generator (G1), mit als MOS-Feldeffekttransistoren ausgebildete Gleichrichterelementen (V12, V22, V32 V42, V52, V62), die mit den Phasenwicklungen (U, V, W) des Generators (G1) in Verbindung stehen und die vom Generator (G1) gelieferte Spannung vor Zuführung zu einer Batterie (B) sowie zu elektrischen Lasten (RL) gleichrichten, wobei die Höhe der Generatorspannung mittels eines Spannungsreglers der den durch die Erregerwicklung (E) fließenden Erregerstrom beeinflusst, geregelt wird, mit einer Schutzschaltung (V31, V41), die der Erregerwicklung (E) zugeordnet ist, **dadurch gekennzeichnet, dass** die in der Erregerwicklung (E) bei schneller Lastverringerung gespeicherte magnetische Energie in elektrische Energie gewandelt und in die Batterie (B) zurückspeist wird, wodurch die Erregerwicklung (E) entregt wird.

2. Gesteuerte Gleichrichterbrücke mit einen mehrere Phasenwicklungen (U, V, W) und eine Erregerwicklung (E) aufweisenden Generator (G1) nach Anspruch 1, **dadurch gekennzeichnet, dass** die Schutzschaltung zwei Halbleiterschalter (V11 und V21) umfasst, die mit der Erregerwicklung (E) in Serie liegen und parallel zur Batterie (B) liegen, dass parallel zum Halbleiterelement (V11) und zur Erregerwicklung (L) ein weiteres Halbleiterelement (V31) liegt und dass parallel zur Erregerwicklung und zum Halbleiterelement (V21) ein Halbleiterelement (V41) liegt.

3. Gesteuerte Gleichrichterbrücke mit einem mehrere Phasenwicklungen (U, V, W) und eine Erregerwicklung (E) aufweisenden Generator (G1) nach Anspruch 2, **dadurch gekennzeichnet, dass** die Halbleiterelemente (V11 und V21) Feldeffekttransistoren sind und dass die Halbleiterelemente (V31 und V41) Dioden sind, die jeweils so angeordnet sind, dass das Halbleiterelement (V31) positive Spannungen zur Batterie (B) leitet und das Halbleiterelement (V21) negative Spannungen zum entsprechenden Anschluss der Batterie (B) leitet.

4. Gesteuerte Gleichrichterbrücke mit einem mehrere Phasenwicklungen (U, V, W) und eine Erregerwicklung (E) aufweisenden Generator (G1) nach einem der vorhergehenden Ansprüche, **dadurch gekennzeichnet, dass** entweder die mit Masse in Verbindung stehenden Low-Side-Transistoren (V42, V52 und V62) der Gleichrichterbrücke oder die mit Br in Verbindung stehenden High-Side-Transistoren (V12, V22, V32) so ansteuer bar sind, dass sie bei einer durch schnelle Lastverringerung auftretenden Load-Dump-Spannung die Generatorwicklungen (U, V, W) kurzschließen.

## Claims

1. Controlled rectifier bridge with a generator (G1) having a plurality of phase windings (U, V, W) and a field winding (E), with rectifier elements (V12, V22, V32, V42, V52, V62) which are in the form of MOS field effect transistors, are connected to the phase windings (U, V, W) of the generator (G1) and rectify the voltage provided by the generator (G1) before said voltage is supplied to a battery (B) and to electrical loads (RL), the level of the generator voltage being controlled using a voltage regulator which influences the field current flowing through the field winding (E), and with a protective circuit (V31, V41) which is associated with the field winding (E), **characterized in that** the magnetic energy stored in the field winding (E) in the event of a rapid reduction in the load is converted into electrical energy and is fed back into the battery (B), thus de-energizing the field winding (E).

2. Controlled rectifier bridge with a generator (G1) having a plurality of phase windings (U, V, W) and a field winding (E) according to Claim 1, **characterized in that** the protective circuit comprises two semiconductor switches (V11 and V21) which are in series with the field winding (E) and are in parallel with the battery (B), **in that** a further semiconductor element (V31) is in parallel with the semiconductor element (V11) and with the field winding (E), and **in that** a semiconductor element (V41) is in parallel with the field winding and with the semiconductor element (V21).

3. Controlled rectifier bridge with a generator (G1) having a plurality of phase windings (U, V, W) and a field winding (E) according to Claim 2, **characterized in that** the semiconductor elements (V11 and V21) are field effect transistors, and **in that** the semiconductor elements (V31 and V41) are diodes which are each arranged in such a manner that the semiconductor element (V31) leads positive voltages to the battery (B) and the semiconductor element (V21) leads negative voltages to the corresponding connection of the battery (B).

4. Controlled rectifier bridge with a generator (G1) having a plurality of phase windings (U, V, W) and a field winding (E) according to one of the preceding claims, **characterized in that** either the low-side transistors (V42, V52 and V62) of the rectifier bridge which are connected to earth or the high-side transistors (V12, V22, V32) which are connected to Br can be driven in such a manner that they short-circuit the generator windings (U, V, W) in the case of a load-dump voltage which occurs as a result of a rapid reduction in the load.

## Revendications

1. Pont redresseur asservi doté d'un générateur (G1) qui présente plusieurs enroulements de phase (U, V, W) et un enroulement d'excitateur (E), des éléments redresseurs (V12, V22, V32, V42, V52, V62) configurés sous la forme de transistors à effet de champ MOS, qui sont reliés aux enroulements de phase (U, V, W) du générateur (G1) et qui redressent la tension délivrée par le générateur (G1) avant de l'amener à une batterie (B) ainsi qu'à des charges électriques (RL), le niveau de la tension du générateur étant régulé au moyen d'un régulateur de tension qui agit sur le courant d'excitation qui traverse l'enroulement d'excitateur (E), et un circuit de protection (V31, V41) associé à l'enroulement d'excitateur (E), **caractérisé en ce que** l'énergie magnétique conservée dans l'enroulement d'excitateur (E) lorsque la charge diminue rapidement est convertie en énergie électrique et renvoyée dans la batterie (B), ce qui désexcite l'enroulement d'excitateur (E).

2. Pont redresseur asservi doté d'un générateur (G1) qui présente plusieurs enroulements de phase (U, V, W) et un enroulement d'excitateur (E) selon la revendication 1, **caractérisé en ce que** le circuit de protection comporte deux commutateurs semi-conducteurs (V11 et V21) qui sont raccordés en série sur l'enroulement d'excitateur (E) et en parallèle sur la batterie (B), **en ce qu'**un autre élément semi-conducteur (V31) est raccordé en parallèle à l'élément semi-conducteur (V11) et à l'enroulement d'excitateur (L) et **en ce qu'**un élément semi-conducteur (V41) est raccordé en parallèle à l'enroulement d'excitateur et à l'élément semi-conducteur (V21).

3. Pont redresseur asservi doté d'un générateur (G1) qui présente plusieurs enroulements de phase (U, V, W) et un enroulement d'excitateur (E) selon la revendication 2, **caractérisé en ce que** les éléments semi-conducteurs (V11 et V21) sont des transistors à effet de champ et **en ce que** les éléments semi-conducteurs (V31 et V41) sont des diodes disposées chacune de telle sorte que l'élément semi-conducteur (V31) amène une tension positive à la batterie (B) et que l'élément semi-conducteur (V21) amène une tension négative à la borne appropriée de la batterie (B).

4. Pont redresseur asservi doté d'un générateur (G1) qui présente plusieurs enroulements de phase (U, V, W) et un enroulement d'excitateur (E) selon l'une des revendications précédentes, **caractérisé en ce que** les transistors (V42, V52 et V62) du côté bas du pont redresseur raccordés à la masse ou les transistors (V12, V22, V32) du côté haut raccordés à Br peuvent être commandés de manière à mettre en court-circuit les enroulements (U, V, W) du générateur lorsqu'une rapide diminution de la charge entraîne l'apparition d'une tension de disparition de la charge.
